# EUROPEAN PATENT APPLICATION

(11) **EP 4 589 741 A1**
(43) Date of publication of application: **23.07.2025**
(21) Application number: 24216876.3
(22) Date of filing: 02.12.2024
(51) Int. Cl.: H01M 50/186, H01M 50/202, H01M 50/209, H01M 50/24, H01M 50/249, H01M 50/271, H01M 50/284, H01M 50/289, H01M 50/26, H01M 50/171, H01M 50/244, H01M 50/242, H01M 50/50

(54) **BATTERY SYSTEM**

(30) Priority: 19.01.2024 CN 202420141547 U; 28.08.2024 WO PCT/CN2024/115073
(71) Applicant: Eve Energy Co., Ltd., Huizhou, Guangdong 516006 (CN)
(72) Inventor: LIANG, Xianyu, Huizhou, Guangdong 516006 (CN); WEI, Xueqing, Huizhou, Guangdong 516006 (CN); LIU, Pingping, Huizhou, Guangdong 516006 (CN)
(74) Representative: Berggren Oy

(57) **Abstract**

A battery system includes: a casing, an installation bracket, a first glue and a cover. The casing is provided with an accommodation cavity therein; the installation bracket is disposed at an opening of the accommodation cavity, and the installation bracket includes a first bracket body and a second bracket body that are connected. Inner walls of the casing, the first bracket body and the second bracket body together define a seal groove; the first glue is disposed in the seal groove, and the cover is fixed at an end of the casing, and at least a portion of the cover is connected to the first glue.

## Description

### TECHNICAL FIELD

The present application relates to the field of battery technologies, and in particular to a battery system.

### BACKGROUND

In the related art, low-voltage battery systems are applied to electric vehicles. A low-voltage battery system is formed by assembling components such as a battery module, a battery management system and an integrated busbar into a casing.

However, the interior space of the casing has not been fully utilized for the structural arrangements inside the low-voltage battery system in the related art, which leads to the relatively large overall size of the low-voltage battery system. Since the available space in an electric vehicle is limited, the overall size of the low-voltage battery system needs to be reduced, therefore more feasible solutions may be available for the arrangement of the low-voltage battery system in the electric vehicle.

### SUMMARY

A battery system is provided in embodiments, and the battery system includes:
a casing provided with an accommodation cavity therein, the accommodation cavity being configured to accommodate a battery module;
an installation bracket disposed at an opening of the accommodation cavity, the installation bracket including a first bracket body and a second bracket body that are connected to each other, the first bracket body extending towards inner walls of the casing, the second bracket body being disposed at a side of the first bracket body away from the accommodation cavity and extending in a direction away from the accommodation cavity; the inner walls of the accommodation cavity, the first bracket body and the second bracket body together defining a seal groove;
a first glue disposed in the seal groove; and
a cover fixed at an end of the casing, wherein at least a portion of the cover is connected to the first glue.

In the technical solutions of the embodiments, the installation bracket is installed inside the accommodation cavity, the seal groove is enclosed by the first bracket body and the second bracket body of the installation bracket, and the inner walls of the casing. That is, the seal groove is formed by the combination of different components (the installation bracket and the casing), which effectively utilizes the space of the accommodation cavity (i.e., the space inside the casing). Thus, there is no need to create additional seal groove on the casing or on other component for the seal between the casing and the cover, effectively reducing the overall size of the battery system.

### BRIEF DESCRIPTION OF THE DRAWINGS

FIG. 1 is a three-dimensional schematic diagram of a battery system provided in some embodiments;
FIG. 2 is a three-dimensional schematic diagram of some embodiments where no installation bracket is provided in the casing;
FIG. 3 is a three-dimensional schematic diagram of a battery system without a cover, as provided in some embodiments;
FIG. 4 is a three-dimensional schematic diagram of an installation bracket provided in some embodiments;
FIG. 5 is a sectional view of a battery system provided in some embodiments;
FIG. 6 is an enlarged view of the portion A in FIG. 5;
FIG. 7 is an enlarged view of the portion A in FIG. 5 where no first glue is provided in a seal groove;
FIG. 8 is a sectional view of a casing provided in some embodiments;
FIG. 9 is a three-dimensional schematic diagram of a cover provided in some embodiments;
FIG. 10 is a three-dimensional schematic diagram of some embodiments from another perspective, where no installation bracket is provided in the casing;
FIG. 11 is an assembly diagram of a battery module and a battery management system, as provided in some embodiments;
FIG. 12 is an assembly diagram of a casing and a battery module installed therein, as provided in some embodiments;
FIG. 13 is a three-dimensional schematic diagram of a casing provided in some embodiments; and
FIG. 14 is a sectional view of a casing provided in some embodiments.

### Reference numbers explanation:

1000. battery system; 1. casing; 101. accommodation cavity; 2. battery module; 21. battery cell; 22. integrated busbar; 221. installation bracket; 2211. first bracket body; 2212. second bracket body; 3. seal groove; 4. first glue; 5. cover; 11. first sub-portion; 12. second sub-portion; 111. first sub-segment; 121. second sub-segment; 6. step surface; 51. cover body; 52. raised portion; 1011. first sub-cavity; 1012. second sub-cavity; 7. battery management system; 71. main body; 72. first input portion; 8. limiting piece; 81. limiting portion; 9. limiting groove; 10. glue injecting groove; 13. second glue; 73. first output portion; 222. second input portion; 14. second output portion; 15. installation slot; 16. guide hole; 17. connecting part; 18. third glue; 19. limiting rib; 20. buffer piece; 223. busbar; 23. protective cover; 24. communication connector; 211. terminal post; 25. fixing piece; 26. output terminal.

### DETAILED DESCRIPTION

In the description of the embodiments, unless otherwise clearly specified and limited, terms such as "connected", "connect" and "fix" should be understood in a generalized manner, for example, may be understood as fixed connection, detachable connection, or integration; or may be understood as mechanical connection or electrical connection; or may also be a direct connection or an indirect connection by means of a medium, or internal communication of two elements or a mutual relationship between two elements. A person of ordinary skill in the art can understand specific meanings of the foregoing terms in the embodiments according to a specific situation.

In the embodiments, unless otherwise clearly specified and limited, a first feature being "above" or "below" a second feature may include that the first feature directly contacts the second feature, and may also include that the first feature does not directly contact with the second feature but contacts the second feature through an additional feature between the first feature and the second feature. Moreover, the first feature being "above", "on" or "on top of" the second feature includes the first feature being directly above and diagonally above the second feature, or merely indicates that a horizontal height of the first feature is higher than a horizontal height of the second feature. The first feature being "below", "under" or "beneath" the second feature includes the first feature being directly below and diagonally below the second feature, or merely indicates that a horizontal height of the first feature is lower than a horizontal height of the second feature.

In the description of the embodiments, orientations or positional relationships indicated by terms such as "up", "down", "left", "right", "front" or "behind" are based on the orientations or position relationships shown in the accompanying drawings, and are for the convenience of describing the embodiments and simplifying the description, rather than implying or indicating that the device or the component referred to should have a particular orientation or constructed and operated in a particular orientation, and thus these terms cannot be understood as limiting the embodiments. In addition, terms "first" and "second" are used for distinguishing in description and have no special meaning.

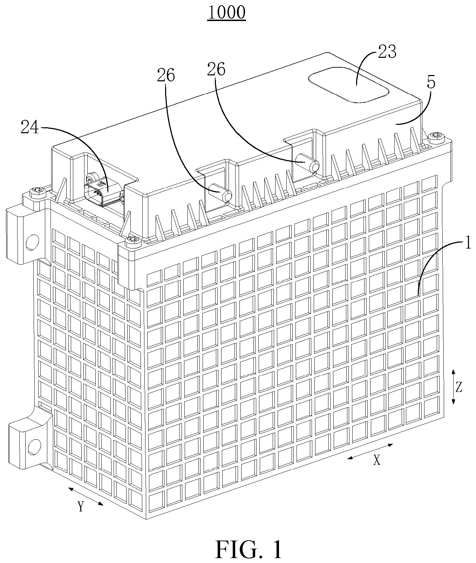

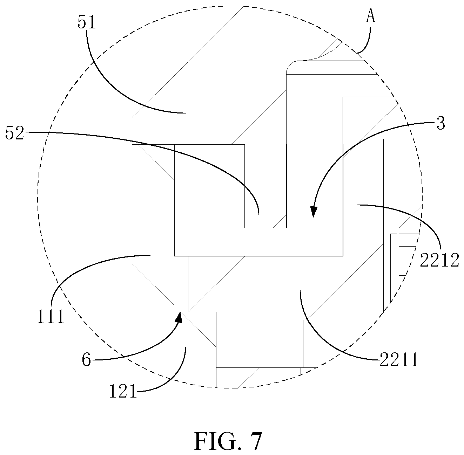

A battery system is proposed in some embodiments, FIGS. 1 to 14 are accompanying drawings according to the embodiments. As shown in FIGS. 1 to 14, the Z direction is the first direction, the Y direction is the second direction, and the X direction is the third direction. The first direction, the second direction and the third direction intersect each other, and angles between any two of the first direction, the second direction and the third direction may be 80° , 85° , 90 ° , 95° or 100° , and are not limited. The embodiments are described below by taking an example in which the angles between any two of the first direction, the second direction and the third direction are 90° . That is, a space rectangular coordinate system is established through the first direction, the second direction and the third direction to describe some embodiments. It will be emphasized that, the angles between any two of the first direction, the second direction and the third direction being 90° do not constitute a limitation to the embodiments described below.

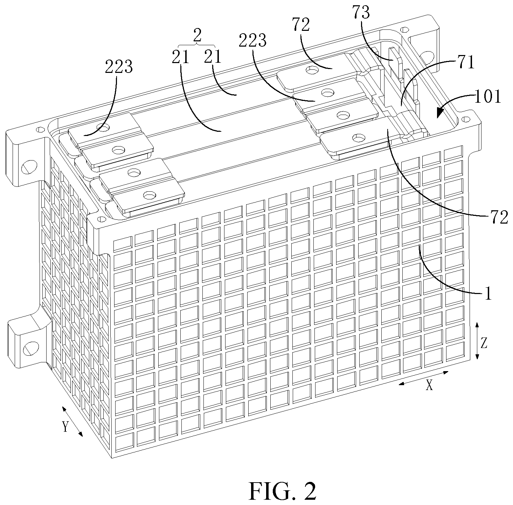

Referring to FIGS. 1 and 2, in some embodiments, the battery system 1000 includes a casing 1, the casing 1 is provided with an accommodation cavity 101 therein, which is configured to accommodate a battery module 2. The battery module 2 includes a plurality of battery cells 21 that are stacked, the battery cells 21 may be stacked in the second direction Y or the third direction X. In an embodiment, the battery cells 21 are stacked in the second direction Y.

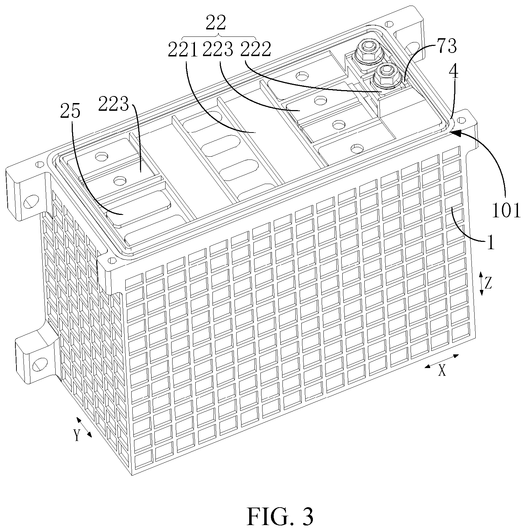

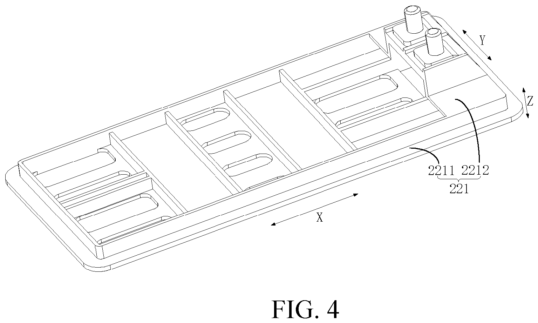

Referring to FIGS. 3 and 4, the battery system 1000 further includes an installation bracket 221 disposed at an opening of the accommodation cavity 101. The installation bracket 221 includes a first bracket body 2211 and a second bracket body 2212 that are connected to each other. The first bracket body 2211 extends towards inner walls of the casing 1, and the second bracket body 2212 is disposed at a side of the first bracket body 2211 away from the accommodation cavity 101 and extends in the direction away from the accommodation cavity 101. The installation bracket 221 is a part of an integrated busbar 22, which supports high-voltage series and parallel connections of the plurality of battery cells 21 in the battery module 2, as well as functions such as temperature sampling of the battery cells 21, voltage sampling of the battery cells 21 and overcurrent fusing.

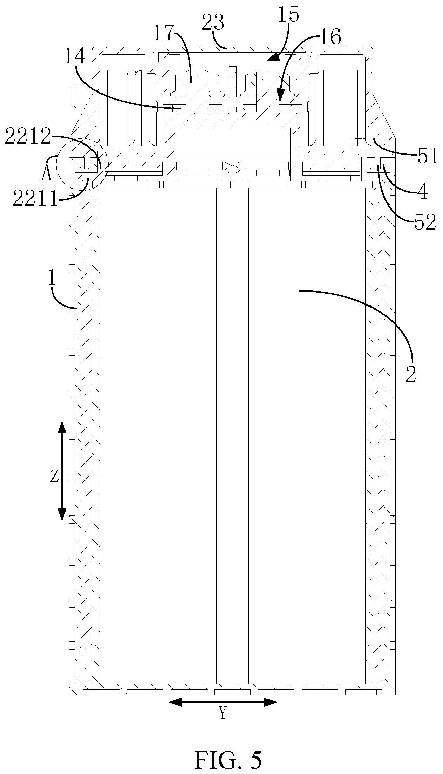

Referring to FIG. 5, the inner walls of the casing 1, the first bracket body 2211 and the second bracket body 2212 together define a seal groove 3. The battery system 1000 further includes a first glue 4 and a cover 5. The first glue 4 is disposed in the seal groove 3, the cover 5 is fixed at an end of the casing 1, and at least a portion of the cover 5 is connected to the first glue 4. That is, the seal groove 3 is defined between the installation bracket 221 installed in the accommodation cavity 101 and the inner walls of the casing 1, and the first glue 4 is disposed in the seal groove 3. When the cover 5 is installed on the casing 1, the cover 5 is connected to the first glue 4, thereby achieving the seal between the casing 1 and the cover 5.

In the technical solutions of the embodiments, since the installation bracket 221 is installed inside the accommodation cavity 101, the seal groove 3 is enclosed by the first bracket body 2211 and the second bracket body 2212 of the installation bracket 221, and the inner walls of the casing 1. That is, the seal groove 3 is formed by the combination of different components (the installation bracket 221 and the casing 1), which effectively utilizes the space of the accommodation cavity 101 (i.e., the space inside the casing 1), thus eliminating the need to create additional seal groove 3 on the casing 1 or on other component for the seal between the casing 1 and the cover 5. Therefore, the overall size of the battery system 1000 is effectively reduced.

In some embodiments, the accommodation cavity 101 extends in the first direction Z. On this basis, the second bracket body 2212 extends in the first direction Z, and the inner (side) walls of the casing 1 protrude out of the first bracket body 2211 in the first direction Z, so that the portion of the inner walls of the casing 1 protruding out of the first bracket body 2211 in the first direction Z is opposite to the second bracket body 2212. That is, the inner walls of the casing 1, the first bracket body 2211, and the second bracket body 2212 together form the seal groove 3 with a U-shaped cross section.

It will be understood that the first bracket body 2211 extends towards the inner walls of the casing 1, ensuring that the edge of the first bracket body 2211 extends to and contacts the inner walls of the casing 1. In an embodiment, the first bracket body 2211 extends in a plane perpendicular to the first direction Z.

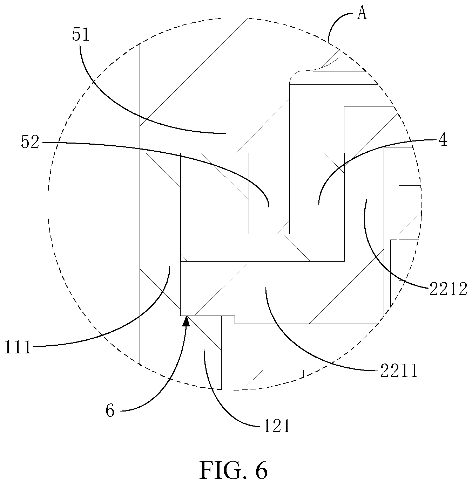

In addition, since the seal groove 3 is formed by the installation bracket 221 and the inner walls of the casing 1, following scheme is adopted in the embodiments to prevent the first glue 4 located in the seal groove 3 from overflowing onto the battery module 2 through the gap between the installation bracket 221 and the inner walls of the casing 1. Referring to FIGS. 6 to 8, the casing 1 includes a first sub-portion 11 and a second sub-portion 12 connected in sequence in the first direction Z, the first sub-portion 11 includes a first sub-segment 111, and the second sub-portion 12 includes a second sub-segment 121. The first sub-segment 111 and the second sub-segment 121 are connected to each other, and a wall thickness of the first sub-segment 111 is less than a wall thickness of the second sub-segment 121, so that a step surface 6 is formed at a connection between the first sub-segment 111 and the second sub-segment 121. The step surface 6 is in contact with a side surface of the first bracket body 2211 away from the second bracket body 2212 in the first direction Z.

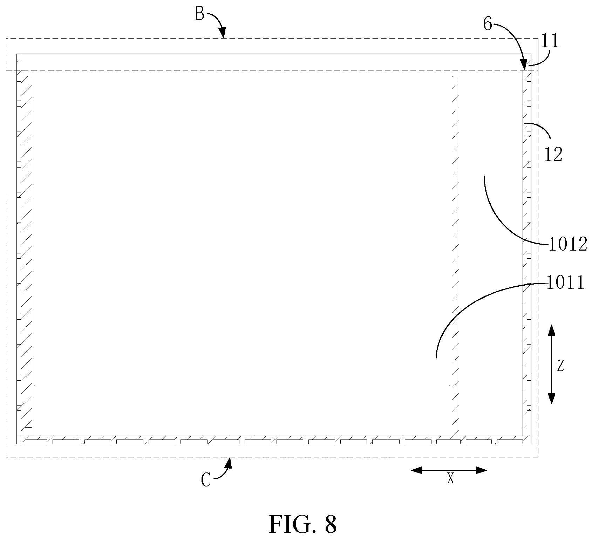

That is, in the embodiments, when the installation bracket 221 is installed inside the accommodation cavity 101, the side surface of the first bracket body 2211 away from the second bracket body 2212 in the first direction Z abuts against the step surface 6, and the step surface 6 limits the movement of the installation bracket 221 towards the battery module 2 located inside the accommodation cavity 101. In addition, the first glue 4 is prevented from overflowing onto the battery module 2 due to the abutment between the side surface of the first bracket body 2211 away from the second bracket body 2212 in the first direction Z against the step surface 6. Referring to FIG. 8, the portion B enclosed by the dashed line in FIG. 8 is the first sub-portion 11, and the portion C is the second sub-portion 12.

Since the step surface 6 is formed by portions of the casing 1 with different wall thicknesses, it is only necessary to define the wall thickness of the first sub-segment 111 at the connection between the first sub-portion 11 and the second sub-portion 12 to be less than the wall thickness of the second sub-segment 121 in the embodiments. The wall thickness of a portion of the first sub-portion 11 where no first sub-segment 111 is provided is not limited, which may be greater than, equal to, or less than the wall thickness of the first sub-segment 111, as long as the portion of the first sub-portion 11 where no first sub-segment 111 is provided does not affect the assembly of the installation bracket 221. Similarly, the wall thickness of a portion of the second sub-portion 12 where no second sub-segment 121 is provided is not limited, which may be greater than, equal to, or less than the wall thickness of the second sub-segment 121.

It will be noted that, since the assembly gap exists between the installation bracket 221 and the casing 1, when the installation bracket 221 is installed in the casing 1, there may be a certain gap between the first bracket body 2211 and the inner walls of the casing 1 in a plane perpendicular to the first direction Z, and a certain gap between the side surface of the first bracket body 2211 away from the second bracket body 2212 in the first direction Z and the step surface 6. However, the first glue 4 has a certain viscosity, and thus cannot pass through both the gap between the first bracket body 2211 and the inner walls of the casing 1, and the gap between the first bracket body 2211 and the step surface 6, thereby preventing the first glue 4 from overflowing onto the battery module 2.

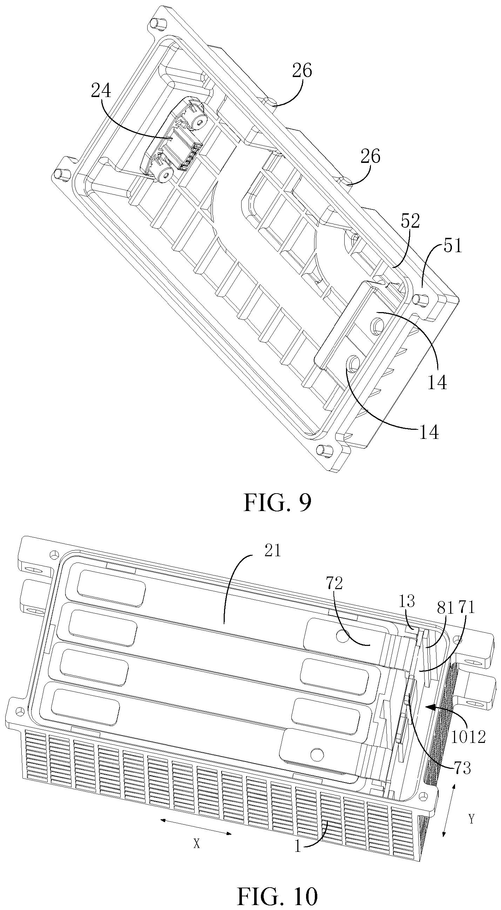

Referring to FIGS. 5 and 9, in some embodiments, the cover 5 includes a cover body 51 and a raised portion 52. A side surface of the cover body 51 close to the casing 1 is in contact with the casing 1, the raised portion 52 is disposed at a side of the cover body 51 close to the casing 1 and extends into the seal groove 3, and at least a part of the raised portion 52 is embedded in the first glue 4. By arranging the raised portion 52 to be embedded in the first glue 4, the contact area between the cover 5 and the first glue 4 is increased when the casing 1 and the cover 5 are fixed, thereby improving the sealing performance of the battery system 1000.

Referring to FIGS. 8, 10 and 11, in some embodiments, the accommodation cavity 101 includes a first sub-cavity 1011 and a second sub-cavity 1012 that are spaced apart from each other, and the battery module 2 is installed inside the first sub-cavity 1011. The battery system 1000 further includes a battery management system 7 including a main body 71 and at least one first input portion 72 connected to the main body 71, the main body 71 is installed inside the second sub-cavity 1012, and the first input portion(s) 72 are further connected to the battery module 2. That is, the accommodation cavity 101 is divided into the first sub-cavity 1011 and the second sub-cavity 1012, and thus the battery module 2 and the battery management system 7 are installed respectively in the embodiments. In an embodiment, each of the first input portion(s) 72 is directly soldered to a terminal post 211 of a corresponding battery cell 21 in the battery module 2, eliminating the need for bolts or nuts for connecting the first input portion 72 and the terminal post 211 of the corresponding battery cell 21, thereby reducing the spatial installation requirements of the battery management system 7 in the casing 1 and reducing the size of the battery system 1000.

In an embodiment, the first sub-cavity 1011 and the second sub-cavity 1012 are spaced apart in the third direction X.

The battery management system 7 is electrically connected to the battery module 2. In an embodiment, the battery system 1000 further includes a plurality of busbars 223, which are also part of the integrated busbar 22. Referring to FIGS. 2 and 3, each busbar 223 connects terminal posts 211 of two adjacent battery cells 21, such that the plurality of battery cells 21 in the battery module 2 are electrically connected. The battery management system 7 also has at least one first input portion 72, each of which is connected to the terminal post 211 of one of the battery cells 21, thereby achieving electrical connection between the battery management system 7 and the battery module 2. It will be noted that, since the battery module 2 has both positive and negative outputs, the battery management system 7 has two first input portions 72 connected to the different terminal posts 211 of the battery cells 21. That is, the two first input portions 72 are connected to the positive and negative outputs of the whole battery module 2. In an embodiment, the two first input portions 72 are spaced apart in the second direction Y and are both connected to the main body 71.

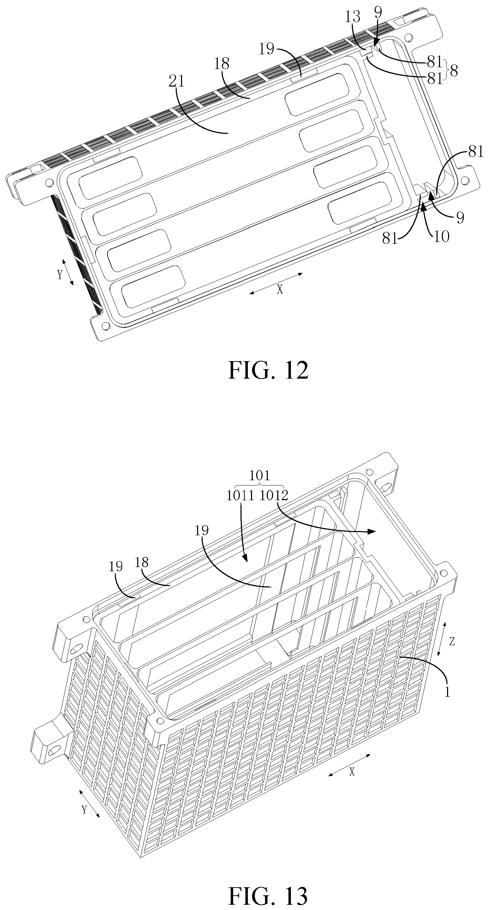

Referring to FIGS. 10 and 12, the battery system 1000 further includes one or more limiting pieces 8 disposed on a portion of the inner walls of the casing 1 in the second sub-cavity 1012, each of the limiting piece(s) 8 includes two limiting portions 81, the two limiting portions 81 are spaced apart such that a limiting groove 9 is formed, and the limiting groove 9 is in communication with the second sub-cavity 1012. At least a portion of the main body 71 is disposed in the limiting groove 9. That is, in the embodiments, the main body 71 is limited and installed in the second sub-cavity 1012 through the limiting groove 9. When the main body 71 is installed in the second sub-cavity 1012, the limiting groove 9 clamps the main body 71. In an embodiment, the main body 71 extends in the plane defined by the first direction Z and the second direction Y, and thus the limiting piece(s) 8 are installed on the portion of the inner walls of the casing 1 in the second direction Y. The two limiting portions 81 are spaced apart in the third direction X such that the limiting groove 9 is formed. When the main body 71 is embedded into the limiting groove 9, the two limiting portions 81 impose limitation on the main body 71 in the third direction X. In addition, the two opposing inner walls of the casing 1 in the second direction Y impose limitation on the main body 71 in the second direction Y.

It will be understood that the main body 71 extends in the plane defined by the first direction Z and the second direction Y, the second direction Y being the stacking direction of the plurality of battery cells 21. With such an arrangement, the dimension of the casing 1 in the third direction X is reduced, and the dimension of the casing 1 in the second direction Y will not be increased while satisfying the stacking arrangement of the plurality of battery cells 21, thereby effectively meeting the design requirements for the size reduction of the battery system 1000.

Following scheme is adopted in the embodiments to improve the reliability of the fixation of the main body 71 inside the second sub-cavity 1012. At least one of the limiting portions 81 is provided with a glue injecting groove 10 in communication with the limiting groove 9. The battery system 1000 further includes a second glue 13 located in the limiting groove 9 and connected to the main body 71 located in the limiting groove 9. That is, the second glue 13 located in the limiting groove 9 bonds the limiting portion 81 with the main body 71 in the embodiments to achieve the relative fixation between the limiting portion 81 and the main body 71, thereby making the main body 71 more securely fixed inside the second sub-cavity 1012.

In some embodiments, two limiting pieces 8 are provided, and the main body 71 is located between the two limiting pieces 8. Two limiting pieces 8 are provided to fix the main body 71 at two opposing sides, ensuring that the main body 71 will not loosen or fall off when being fixed inside the second sub-cavities 1012. Since each of the limiting pieces 8 is disposed on one inner wall of the casing 1 in the second direction Y, the two limiting pieces 8 are arranged opposite to each other in the second direction Y. Similarly, since the limiting portion 81 is provided with the glue injecting groove 10 and the second glue 13 is arranged inside the glue injecting groove 10, the two limiting portions 81 in the two limiting pieces 8 that are opposite to each other in the second direction Y have glue injecting grooves 10 filled with the second glues 13 inside, thereby strengthening the reliability of the fixation of the main body 71.

It will be understood that, compared with the fixing manner of the main body 71 by using bolts or nuts in the related art, the manner in which the main body 71 is clamped and limited by the limiting piece(s) 8 and fixed inside the second sub-cavity 1012 by the second glue(s) 13 reduces the spatial installation requirements of the battery management system 7 inside the casing 1, thereby reducing the size of the battery system 1000.

In addition, both the limiting groove 9 and the glue injecting groove 10 are arranged to extend in the first direction Z to facilitate the installation of the main body 71 and the injection of the second glue 13.

Referring to FIGS. 2, 3 and 5, in some embodiments, the battery management system 7 further includes a first output portion 73; the battery system 1000 further includes a second input portion 222 and a second output portion 14, with the second input portion 222 being disposed on the installation bracket 221 and the second output portion 14 being disposed on the cover 5. The first output portion 73 is connected to the second input portion 222, and the second input portion 222 is connected to the second output portion 14. The second input portion 222 is a part of the integrated busbar 22. In the embodiments, the current output path of the battery system 1000 is as follows: the battery module 2 outputs the current to the first input portion 72, and then the current flows to the second input portion 222 via the main body 71 and the first output portion 73, and then the current is transported to the second output portion 14 on the cover 5 for output.

Referring to FIG. 9, the cover 5 is also provided with output terminals 26, and each of the output terminal 26 is connected to a second output portion 14, thereby transporting the current of the battery system 1000 to the whole vehicle. Two output terminals 26 are provided, one is the positive output terminal and the other one is the negative output terminal. Therefore, the first input portions 72, the first output portions 73, the second input portions 222, and the second output portions 14 that are connected are all provided in number of two, so as to be connected to the positive output terminal and the negative output terminal, respectively.

In addition, the cover 5 is further provided with a communication connector 24, which is the communication connection interface between the battery system 1000 and the whole vehicle.

Referring to FIG. 5, the cover 5 is provided with an installation slot 15 at the side away from the casing 1, and the cover 5 is further provided with at least one guide hole 16 in communication with both the installation slot 15 and the accommodation cavity 101. The battery system 1000 further includes connecting part(s) 17 disposed inside the installation slot 15 and connected to the second output portion(s) 14, and at least a portion of each connecting part 17 extends from a guide hole 16 into the accommodation cavity 101 and is connected to a second input portion 222. That is, in the embodiments, since the second output portion(s) 14 are disposed on the cover 5 and the second input portion(s) 222 are disposed on the installation bracket 221 and located inside the casing 1, when the cover 5 and the casing 1 are assembled, the connecting part(s) 17 are arranged to connect the second input portion(s) 222 and the second output portion(s) 14, and the connecting part(s) 17 pass through the guide hole(s) 16 to connect the second input portion(s) 222 and the second output portion(s) 14. In an embodiment, the connecting part(s) 17 each are a combination of a bolt and a nut. In addition, the cover 5 is further provided with a protective cover 23 at the opening of the installation slot 15 to protect the connecting part(s) 17 inside the installation slot 15.

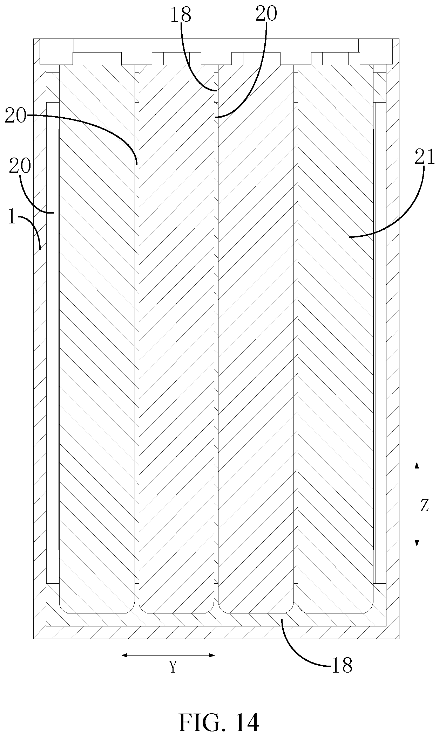

Referring to FIGS. 13 and 14, the battery system 1000 further includes a third glue 18 located between at least a portion of the inner walls of the casing 1 and the plurality of battery cells 21. That is, the third glue 18 is arranged to fix the battery cells 21 inside the accommodation cavity 101 in the embodiments. The location of the third glue 18 is not limited. In an embodiment, the third glue 18 is arranged on all the inner walls of the casing 1 adjacent to the plurality of battery cells 21. In another embodiment, the third glue 18 is arranged on a portion of the inner walls of the casing 1 adjacent to the plurality of battery cells 21.

In an embodiment, a portion of the third glue 18 is coated on the bottom of the accommodation cavity 101, and after the battery module 2 is installed inside the accommodation cavity 101, the battery module 2 and the casing 1 are partially secured. Next, another portion of the third glue 18 is arranged on all the inner walls of the casing 1 adj acent to the plurality of battery cells 21.

The battery system 1000 further includes at least one limiting rib 19 disposed on the inner walls of the casing 1 and limiting the plurality of battery cells 21. The limiting rib(s) 19 limit the positions of the plurality of battery cells 21 when the plurality of battery cells 21 are placed inside the casing 1, and also increase the overall structural strength of the casing 1. Similarly, when the plurality of battery cells 21 are installed inside the accommodation cavity 101, the limiting rib(s) 19 also separate the battery cells 21 from the inner walls of the casing 1, providing enough space for the injection of the third glue 18 and ensuring that the third glue 18 around the plurality of battery cells 21 has sufficient thickness. Referring to FIG. 13, the limiting ribs 19 are provided and located on the two opposite inner walls of the casing 1 in the second direction Y and extend in the first direction Z. In addition, additional limiting rib(s) 19 is provided on the bottom wall of the casing 1 in the first direction Z and extends in the second direction Y.

Referring to FIG. 14, in some embodiments, the battery system 1000 also includes at least one buffer piece 20, each of which is disposed between two adjacent battery cells 21. The buffer piece 20 has a certain capacity for elastic deformation, thereby providing a certain pre-tightening force for two adjacent battery cells 21 after the battery modules 2 are installed inside the casing 1, and ensuring the cycling performance of the battery cells 21.

In addition, the battery cells 21 extend in the plane defined by the first direction Z and the third direction X, and the buffer piece 20 is located between two adjacent battery cells 21. That is, the buffer piece 20 is at a side of a battery cell 21 in the second direction Y. Expansion areas of the battery cell 21 are at two opposite sides of the battery cell 21 in the second direction Y, and the buffer piece 20 is disposed in the expansion area to prevent the third glue 18 from contacting the expansion area of the battery cells 21, thereby avoiding the force generated by the expansion of the battery cells 21 from acting on the casing 1 through the third glue 18, which could lead to the casing 1 cracking.

Similarly, the buffer piece(s) 20 also provide a buffering effect when the battery cells 21 expand. In an embodiment, the buffer piece(s) 20 are buffering foam.

In some embodiments, additional buffer piece(s) 20 are also provided between at least one battery cell 21 close to one inner wall of the casing 1 and the inner wall. That is, the buffer piece(s) 20 are also provided between the battery cell(s) 21 and the inner wall(s) of the casing 1 to prevent the expansion area of the battery cell(s) 21 from being contact with the third glue 18.

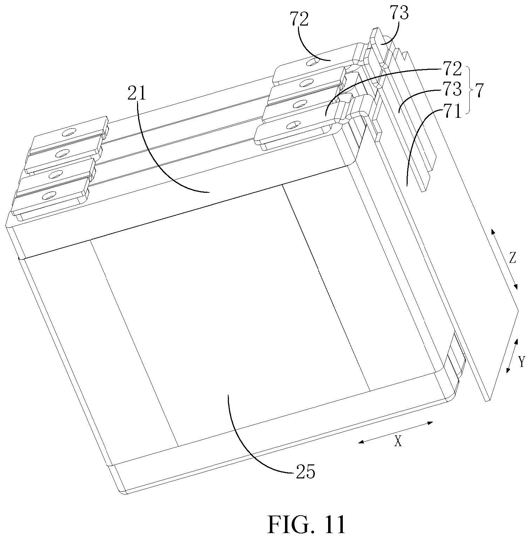

Referring to FIG. 11, the battery system 1000 further includes fixing pieces 25, which are disposed around the plurality of battery cells 21. By providing the fixing pieces 25, the plurality of battery cells 21 in the battery module 2 are fixed, facilitating the assembly and installation of the plurality of battery cells 21 in the accommodation cavity 101. In an embodiment, the fixing pieces 25 are fiberglass cloth.

## Claims

1. A battery system, **characterized in that** the battery system comprises:
a casing (1) provided with an accommodation cavity (101) therein, the accommodation cavity (101) being configured to accommodate a battery module (2);
an installation bracket (221) disposed at an opening of the accommodation cavity (101), wherein the installation bracket (221) comprises a first bracket body (2211) and a second bracket body (2212) that are connected to each other, the first bracket body (2211) extends towards inner walls of the casing (1), the second bracket body (2212) is disposed at a side of the first bracket body (2211) away from the accommodation cavity (101) and extends in a direction away from the accommodation cavity (101); the inner walls of the accommodation cavity (101), the first bracket body (2211) and the second bracket body (2212) together define a seal groove (3);
a first glue (4) disposed in the seal groove (3); and
a cover (5) fixed at an end of the casing (1), wherein at least a portion of the cover (5) is connected to the first glue (4).

2. The battery system according to claim 1, **characterized in that** the accommodation cavity (101) extends in a first direction;
the casing (1) comprises a first sub-portion (11) and a second sub-portion (12) connected in sequence in the first direction, the first sub-portion (11) comprises a first sub-segment (111), the second sub-portion (12) comprises a second sub-segment (121), the first sub-segment (111) and the second sub-segment (121) are connected to each other, and a wall thickness of the first sub-segment (111) is less than a wall thickness of the second sub-segment (121), so that a step surface (6) is formed at a connection between the first sub-segment (111) and the second sub-segment (121); and
the step surface (6) abuts against a side surface of the first bracket body (2211) away from the second bracket body (2212) in the first direction.

3. The battery system according to claim 1, **characterized in that** the cover (5) comprises a cover body (51) and a raised portion (52), a side surface of the cover body (51) close to the casing (1) is in contact with the casing (1), the raised portion (52) is disposed at a side of the cover body (51) close to the casing (1) and extends into the seal groove (3), and at least a part of the raised portion (52) is embedded in the first glue (4).

4. The battery system according to claim 1, **characterized in that** the accommodation cavity (101) comprises a first sub-cavity (1011) and a second sub-cavity (1012) that are spaced apart, and the battery module (2) is installed inside the first sub-cavity (1011); and
the battery system (1000) further comprises a battery management system (7), the battery management system (7) comprises a main body (71) and a first input portion (72) connected to the main body (71), the main body (71) is installed inside the second sub-cavity (1012), and the first input portion (72) is further connected to the battery module (2).

5. The battery system according to claim 4, **characterized in that** the battery system (1000) further comprises one or more limiting pieces (8) disposed on a portion of the inner walls of the casing (1) in the second sub-cavity (1012), each of the one or more limiting piece (8) comprises two limiting portions (81), the two limiting portions (81) are spaced apart to form a limiting groove (9), and the limiting groove (9) is in communication with the second sub-cavity (1012); and
at least a portion of the main body (71) is disposed in the limiting groove (9).

6. The battery system according to claim 5, **characterized in that** at least one of the limiting portions (81) is provided with a glue injecting groove (10) in communication with the limiting groove (9); and
the battery system (1000) further comprises a second glue (13), and the second glue (13) is located in the limiting groove (9) and connected to the main body (71) located in the limiting groove (9).

7. The battery system according to claim 5, **characterized in that** the limiting pieces (8) are provided in a number of two, and the main body (71) is located between the two limiting pieces (8).

8. The battery system according to claim 4, **characterized in that** the battery management system (7) further comprises a first output portion (73);
the battery system (1000) further comprises a second input portion (222) and a second output portion (14), the second input portion (222) is disposed on the installation bracket (221), and the second output portion (14) is disposed on the cover (5); and
the first output portion (73) is connected to the second input portion (222), and the second input portion (222) is connected to the second output portion (14).

9. The battery system according to claim 8, **characterized in that** the cover (5) is provided with an installation slot (15) at a side away from the casing (1), and the cover (5) is further provided with at least one guide hole (16) in communication with both the installation slot (15) and the accommodation cavity (101); and
the battery system (1000) further comprises a connecting part (17) disposed inside the installation slot (15) and connected to the second output portion (14); at least a portion of the connecting part (17) extends from the at least one guide hole (16) into the accommodation cavity (101) and is connected to the second input portion (222).

10. The battery system according to any one of claims 1 to 9, **characterized in that** the battery module (2) comprises a plurality of battery cells (21) that are stacked; and
the battery system (1000) further comprises a third glue (18) located between at least a portion of the inner walls of the casing (1) and the plurality of battery cells (21).

11. The battery system according to claim 10, **characterized in that** the battery system (1000) further comprises at least one limiting rib (19) disposed on one or more of the inner walls of the casing (1) and limiting positions of the plurality of battery cells (21).

12. The battery system according to claim 10, **characterized in that** the battery system (1000) further comprises one or more buffer pieces (20), each of which is disposed between adjacent two of the battery cells (21).

13. The battery system according to claim 10, **characterized in that** the battery system (1000) further comprises a plurality of buffer pieces (20), at least one of the buffer pieces (20) is disposed between adjacent two of the battery cells (21).

14. The battery system according to claim 13, **characterized in that** at least another of the buffer pieces (20) is disposed between at least one of the battery cells (21) close to one of the inner walls of the casing (1) and the inner wall of the casing (1).

15. The battery system according to claim 10, **characterized in that** the battery system (1000) further comprises fixing pieces (25) disposed around the plurality of battery cells (21).
